# EUROPEAN PATENT APPLICATION

(11) **EP 3 467 919 A1**
(43) Date of publication of application: **10.04.2019**
(21) Application number: 17195375.5
(22) Date of filing: 09.10.2017
(51) Int. Cl.: H01M 4/66, H01M 4/70, H01M 10/0525

(54) **CURRENT COLLECTOR WITH AN IMPROVED SECURITY BEHAVIOR AND BATTERY CELL COMPRISING THE SAME**

(71) Applicant: Robert Bosch GmbH, 70442 Stuttgart (DE)
(72) Inventor: Hiller, Martin Manuel, 70184 Stuttgart (DE); Fuchs, Franz, 70191 Stuttgart (DE)
(74) Representative: Bee, Joachim

(57) **Abstract**

The present invention relates to a current collector (10) for a battery cell, wherein the current collector (10) is formed in a multilayer arrangement comprising at least three layers, characterized in that the current collector comprises in its layer arrangement a first collector layer (12), a second collector layer (14) and a melting layer (16), wherein the melting layer (16) is provided between the first collector layer (12) and the second collector layer (14), wherein the melting layer (16) has a melting point which is lower compared to at least one of the first collector layer (12) and the second collector layer (14), and wherein the melting layer (16) is formed from a polymeric material and the first collector layer (12) and the second collector layer (14) are formed from a metal or from a metal alloy.

## Description

The present invention relates to a current collector which shows an improved security behavior. The present invention further relates to a battery cell, such as a lithium ion cell, comprising such a current collector.

### State of the art

Electrochemical energy storing devices, such as lithium ion batteries, are known and used in wide application areas. Li-ion batteries are vital energy storage devices due to their high specific energy density. They are predominantly used in consumer electronics; however, improvements in safety are required for full acceptance of Li-ion cells in transportation applications, such as electric vehicles.

US 2008/0248385 A1 describes a nonaqueous electrolyte secondary battery which includes a nonaqueous electrolyte and a positive electrode that occludes lithium ions reversibly. The positive electrode includes active material layers and a sheet-like collector that supports the active material layers. The collector contains aluminum and at least one element other than aluminum. The average composition that is obtained by averaging the ratio of the elements composing the collector in the direction of the thickness of the collector is equal to the composition of an alloy whose liquidus temperature is 630° C. or lower. This document states that it would make it possible to prevent heat from being generated due to an internal short circuit in the nonaqueous electrolyte secondary battery.

US 5,415,948 describes a self-protecting current collector, with lateral collection, an insulating plastic support film having a thickness between about 1 and 30 microns, and a conductive metallic coating, of a thickness lower than about 10 microns, adhering to at least one face of the insulating support film, compatible with the corresponding material of the electrode of the generator, and wherein its conductive surface is divided into a plurality of adjacent distinct areas, each area being electrically insulated by means of non-conductive borders except for at least one conductive bridge of small cross-section connected to a lateral common conductive margin enabling a lateral collection of the entire distinct areas; the nature and electrical resistance of the conductive bridges enabling on the one hand, passage of currents corresponding to maximum currents provided for each of the individual collection areas of the generator to be produced, and limiting on the other hand, in case of an accidental short-circuit inside an area, the maximum current received by this area originating from the entire areas of the generator

US 5,409,786 describes a cathode which is comprised of a major amount of active cathode material and a binding amount of an ionically nonconductive prepolymeric composition. The prepared cathode material may be applied to an electrically conductive current collector. The current collector can be a metal foil, a metal screen, a metallic or carbon foam, or a metallic or carbon fiber mat so long as it is electrically conductive.

WO 99/24995 A1 describes a double layer capacitor and a method for producing the same wherein the double layer capacitor comprises a conductive coating based on binders of the melamine resin type such that the conductive coating is present at the interfaces between the current collectors and the electrodes.

CN 202839842 describes a multiplying power lithium ion battery which comprises an anode, a cathode, a diaphragm, and a non-aqueous electrolyte. The anode consists of an aluminum foil current collector and coatings coated on both sides of the aluminum foil current collector. The cathode consists of a copper foil current collector and coatings coated on both sides of the copper foil current collector. The coating is formed by the electrode material as such.

CN 103956499 describes a method for preparing a security coating for a positive current collector. With this regard, the surface of the positive electrode current collector, such as an aluminum foil, can be coated with a layer comprising a polymer matrix material, a conductive filler and an adhesive. For example, an aluminum foil having the security coating may be used as the positive electrode.

US 8,004,823 B2 describes a lithium ion capacitor having a positive electrode and a negative electrode. The positive electrode and/or the negative electrode has a current collector made of a metal foil that has many holes that penetrate through both sides. The current collector may be formed from aluminum, stainless steel or the like.

### Disclosure of the invention

The present invention relates to a current collector for a battery cell, wherein the current collector is formed in a multilayer arrangement comprising at least three layers, wherein the current collector comprises in its layer arrangement a first collector layer, a second collector layer and a melting layer, wherein the melting layer is provided between the first collector layer and the second collector layer, wherein the melting layer has a melting point which is lower compared to at least one of the first collector layer and the second collector layer, and wherein the melting layer is formed from a polymeric material and the first collector layer and the second collector layer are formed from a metal or from a metal alloy.

Such a current collector shows significant security improvements especially by reducing or preventing the danger of a thermal runaway.

It is thus described a current collector for a battery cell. A current collector generally is a known part of a battery, or battery cell, respectively, and is generally positioned adjacent and connected to a layer of active material and may be used for electrically connecting the respective pole of the battery. It may thus form, together with the active material, an electrode. Generally, the current collector as described may refer to an anode or to a cathode without leaving the scope of the present invention.

The current collector is formed in a multilayer arrangement having at least three layers. In other words, the current collector may comprise three or more than three layers. In any case, the current collector, or the multilayer arrangement, respectively, comprises at least a first collector layer, a second collector layer and a melting layer.

Regarding the collector layers, these are particularly electrically conducting layers, wherein the conductivity may be chosen according to the desired needs. It may particularly lie in the range of typical current collectors and may thus allow the desired working behavior of the battery cell equipped with such a current collector. Further, the first and the second collector layer may be the same or they may differ with regard to the used material, the thickness, etc.

Regarding the layer arrangement, it is provided that the melting layer is provided between the first collector layer and the second collector layer. It may for example be provided that the at least three layers and thus the first collector layer, the melting layer and the second collector layer are arranged consecutively with regard to each other and contacting each other. This shall mean that the first collector layer may be provided directly adjacent the melting layer and contacts the latter and that the melting layer may be provided directly adjacent the second collector layer and contacts the latter. Therefore, the layer arrangement may consist of the layers first collector layer - melting layer - second collector layer. This arrangement may be preferred. However, it is not strictly excluded that further layers are provided between the collector layers and the melting layer, for example.

With regard to the melting layer, it is especially provided that the melting layer has a melting point which is lower compared to at least one of the first collector layer and the second collector layer. For example, the melting layer may have a melting point which is lower compared to both of the first collector layer and the second collector layer.

In other words, the melting layer comprises or consist of a melting material, which has a melting temperature, which melting temperature is lower compared to a collector material the first collector layer consists of or comprises, and/or which melting temperature is lower compared to a collector material the second collector layer consists of or comprises. The temperature difference of the melting point of the material of the melting layer and the first collector layer and/or the second collector layer may lie in a range of equal or more than 50°C, particularly equal or more than 100°C, such as equal or more than 250°C, for example equal or more than 400°C.

With this regard, it is provided that the melting layer is formed from a polymeric material and the first collector layer and the second collector layer is formed from a metal or from a metal alloy. It may be provided that this structure is realized by a laminate, such as a laminate foil, or that the metal or metal alloy is coated onto the polymer layer or it is sputtered or evaporated thereon, for example.

Especially the respective provision of the melting layer like described before may show significant advantages over the solutions of the prior art. Especially, the security behavior of a respective battery cell equipped with such a current collector may be improved with regard to the solutions of the prior art.

In detail, it may be important to increase the safety of battery cells, such as lithium ion cells, against internal short circuits. In fact, if an internal short circuit occurs, the entire cell, i.e. also other layers can be discharged through this single internal short by electrical conduction over the tabs or current collectors. This may lead to increasing temperatures and subsequently to a thermal runaway which may have significant effects.

Such internal short circuits may be caused for example by particle penetrations into the battery cell, but generally, the current collectors as described counteract any type of short-circuits, such as due to particles, dendrites, crash tests, crush tests and like said the nail penetration. A measure for imitating such particle penetrations is the so-called nail penetration test. At such tests, a nail is penetrated into the cell to imitate particle penetration. It may be a starting point for having an improved security behavior to optimize and engineer the damaged zone around the nail or penetrating particle in such way, that the short circuit resistance is increased and in general the heat dissipated over the created short circuit in the cell is minimized. Like this, a thermal runaway of the cell and a safety critical event might be avoided.

A similar possibility exists during nail penetration when the damage within the electrode is not homogeneous throughout the layers, but instead leads to good electrical conduction, i.e. a low resistance at the damaged area around the nail, in some of the layers and bad contact in other layers.

According to the current collector as described, design elements for the positive electrode and/or the negative electrode of the cell are presented that can increase the internal short resistance and can avoid a thermal runaway like it is described in detail below.

In detail, by providing a melting layer which is provided between two collector layers and which has a melting point which is lower compared to at least one of the first and the second collector layer, a short circuit may be reduced. This may be mainly due to the fact that as soon as the short circuit heats up locally the current collector, this effect will be followed by the melting layer, or the melting material, respectively, to melts and to shrink. Due to this, the melting layer does no longer contribute to the stability of the respective collector layer which in turn will result in damaging the collector layer, or collector layers such, that the electric current path, especially the dominant and thus most low-ohmic current path is interrupted. It thus de-contacts the respective collector layer from the short circuit contact area. As the low ohmic short circuit is lost, the heat generation is significantly reduced and the cell stays in a safe state.

Due to the low melting point of the melting layer or its melting material, respectively, this security effect is already reached at comparably low temperatures, depending on the material of the melting layer. For example, the security effect may already be effective at exemplary temperatures of 130°C, in contrast to the melting point of aluminium, for example, which lies at approximately 660 °C for this typical current collector material. Therefore, the provision of a polymeric material offers an especially significant security effect.

This is especially advantageous because the strong heat generation via the short-circuit is stopped before a strong hot-spot is generated and a thermal runaway occurs. Under normal cell cycling conditions, the temperature stays well below the melting temperature of the material of the melting layer, such as below 100°C, so that the functionality of the current collector is not hindered during normal working modes.

Given the above, the low temperature melting layer, which may be formed as a laminated foil, is used to reduce the electrical conductivity of the cell during abuse tests and as a safety feature for production errors (e.g. particle contaminations, etc.) and may further counteract any type of short-circuit occurring.

The current collector as described thus reduces the danger of thermal runaways by decreasing the thermal stability of the current collector. This is performed by providing the melting layer between the collector layers. Thus, when the polymer melts, the stability of the multilayer is reduced and the conductive paths are weakened or completely lost in that the current path is interrupted when the polymer material melts. This results in the loss of the low-ohmic contact and an increase of the damage zone resistance. The developed heat power due to the current flow over the short circuit is reduced and the necessary energy to activate the exothermal reactions of the active materials and the electrolyte is not reached.

Next to the above, a further advantage of the melting layer in a normal working state is that the laminate current collector might be thinner compared to bare metal having the same mechanical stability.

Apart form that the gravimetric as well as volumetric energy density may be improved.

Further, due to the provision of a polymeric material, the shrinkage behavior of the current collector may be reduced, which allows a high stability in a normal working mode. Further, especially a polymeric material may be advantageous, as a polymeric material may combine a high mechanical strength of the current collector with a low melting temperature which may be very adaptive. Therefore, the arrangement of a battery cell being equipped with such a current collector may be chosen especially freely, as for example folding the current collector, or the electrode, respectively, for getting a high capacity may be achieved without the danger of deteriorating the current collector. Further, by providing a low and especially adaptive melting temperature, an effective security effect which may be adapted to the desired needs may be achieved. Examples for respective polymeric materials which show the above advantages are in a non-limiting manner polyolefines, such as polyethylene or polypropylene.

For example, the polymer may be electrically conductive, so that both collector layers may act as one combined collector. This allows an electrical connection of the collector layers as well as the described melting effect. In order to achieve this, an electrically conductive material may be included in the polymer, such as carbon black. For example, a polymer composite comprising or consisting of polyethylene and carbon black may be realized.

Often metallic layers are mechanically damaged easier compared to polymeric layers. Therefore, due to the provision of a polymeric layer as melting layer the stability may be improved.

It may be preferred that the melting layer has a melting point which is lower compared to both of the first collector layer and the second collector layer. According to this embodiment, the security effect may be especially effective. This may be due to the fact that in case of a short circuit, both collector layers may be interrupted because of which the whole current collector loses its stability and may interrupt the flowing short circuit current. Therefore, especially according to this embodiment, a thermal runaway may be prevented especially effective.

It may further be preferred that at least one of the surfaces of the melting layer facing the first collector layer and facing the second collector layer is structured. By structuring the melting layer, the stability of the respective collector layer may be reduced especially effectively in case the melting layer is molten. Apart from that, the stability of the whole current collector during a normal working mode may be improved.

The latter positive effects may be achieved especially effectively, in case at least one of the surfaces of the melting layer facing the first collector layer and facing the second collector layer is structured by protrusions and/or recesses.

It may further be preferred that at least one of the first collector layer and the second collector layer, for example both of the first collector layer and the second collector layer are formed from aluminum or an aluminum alloy. According to this embodiment or generally, the current collector may especially be part of a cathode. It has been found that especially cathodes may under circumstances be influenced by a short circuit in case of a particle penetration, for example as it could be shown that the most critical and low-ohmic contributions to the short-circuit are under the participation of an electric contact with the cathode's current collector. For example, short-circuits with a current flow directly from the anode to the cathode current collector such as aluminum current collector when avoiding the higher ohmic cathode active material are especially low ohmic. If this direct electric contact to the cathode current collector is lost by melting away the short circuit resistance is strongly increased in that the current flow is once again forced over the high ohmic cathode active material.

In case a direct contact of a nail, for example, to a current collector being formed from aluminum is present, the short circuit may at first be low-ohmic. Due to the low melting point of aluminum, however, a fast melting of the aluminum may occur. However, due to the invention, such a melting may be realized even earlier so that a higher security with regard to thermal runaways may be given.

Therefore, especially in case the collector layers are formed from aluminum or an aluminum alloy and/or further especially in case the current collector is formed as a cathode, or in other words acts as cathode, the danger of significant danger effects such as a thermal runaway may be reduced. Thus, the fast destruction of conductive paths for currents running through the aluminum foils as collector layers, for example, is helpful to prevent thermal runaway.

With regard to the aluminum alloy, it may be especially preferred that the current collector is formed from an aluminum alloy which has a melting point lying at less than 660°C such as below 600°C and thus the melting point below the one of aluminum. With this regard, melting point of the current collector may be reduced with regard to the use of aluminum. Further, especially the usage of an aluminum alloy may allow to provide comparable electrical properties and mechanical stability compared to aluminum especially when used in a battery electrode. Therefore, the provision of such an alloy may be especially preferred in case an aluminum current collector is exchanged and thus for the provision of a current collector which may be used as a cathode current collector.

With regard to the alloy, it may be provided that the current collector is formed from an aluminum silicon alloy. It may be especially preferred that the aluminum silicon alloy has a silicon content in an amount of equal or more than 1 wt.-% to equal or less than 15 wt.-%, such as equal or less than 7 wt.-% or equal or less than 12 wt.-%, wherein the rests, which may be formed from magnesium and manganese, or further metals, may be provided in an amount of equal or less than 5 wt.-%, such as equal or less than 2 wt.-%. The further component which may be present in an amount to result at 100 wt.-% is aluminum. As a non-limiting example, the aluminum silicon alloy may be AlSil2. The provision of an aluminum silicon alloy such as exemplary one as described above may significantly reduce the melting point of the alloy, such as to 576° for the example of AlSi12. Further examples may comprise Al97.5/Si1.0/Mg0.8/Mn0.7; Al97.4/Si1.0/Mg0.9/Mn0.7, or Al91.7/Si7.0/Mg0.3.

Especially, in case the melting point of the collector layer or the collector layers is reduced, the working conditions in a normal working mode may be kept comparable to aluminum, however the stability of the current collector in case of a short-circuit is further reduced as not only the melting layer melts but also the stability of the collector layer is reduced. This further improves the security effect as described above.

However, it may also be preferred that at least one of the first collector layer and the second collector layer, such as both of the first collector layer and the second collector layer, are formed from copper or a copper alloy. According to this embodiment but not restricted thereto, it may especially be achieved that the current collector is part of an anode. This embodiment as well may provide a significant security effect.

It may be provided that the current collector is formed from a copper alloy which has a melting point lying at less than 1085°C, such as less than 1000°C. According to this, the melting point of the current collector may be reduced with regard to the use of copper. Further, especially the usage of a copper alloy may allow to provide comparable electrical properties and mechanical stability compared to copper especially when used in a battery electrode. Therefore, the provision of such an alloy may be especially preferred in case a copper current collector is exchanged and thus for the provision of a current collector which may be used as an anode.

With regard to the alloy, it may be provided that the current collector is formed from a copper alloy, for example a copper-zinc alloy or a copper silicon alloy. It may be especially preferred that the copper zinc alloy has a comparably high amount of zinc, such as equal or more than 5 wt.-%. As a non-limiting example, the copper zinc alloy may be CuZn5, more preferred CuZn30, even more preferred CuZn37. With this regard, the alloy may comprise 37 wt.-% zinc, up to 5wt.- rests, such as 3 wt.-% lead. The further component which may be present in an amount to result at 100 wt.-% is copper. The provision of a comparably high zinc content may thus reduce the melting point of the alloy and thus of the current collector especially effectively which may be especially advantageous as described below.

Therefore, a layer arrangement of the current collector being a multilayer of Al/polymer/Al or Cu/polymer/Cu or Al-alloy/polymer/Al-alloy or Cu-alloy/polymer/Cu-alloy may be preferred. It thus becomes clear that the first and the second collector layer may be formed form different or from the same materials. In the first case, it is preferred that the melting layer is electrically isolative, whereas in the second case it may be preferred that the melting layer is electrically isolative or electrically conductive.

It is, however, not strictly excluded from the present invention that the first collector layer and the second collector layer have different materials, wherein the before-named examples may be advantageous for the collector layer facing the layer of active material. It is thus preferred that the whole collector may act as a cathode current collector or as an anode current collector.

Additionally or alternatively to the above arrangements, it may be advantageous that the current collector is at least partly provided with a thermal insulation layer between a main layer, especially such like described before, and an active material layer, wherein the thermal insulation layer has a thermal conductivity which is lower compared to the thermal conductivity of the active material. According to this embodiment, it may be provided that the heat which may be formed in the current collector is not or only to a decreased amount guided away from the active material but stays in the layer of the current conductor. This alternative thus effectively accelerates melting of the current conductor, or its melting layer, respectively, at comparably low temperatures by providing an effective thermal decoupling of the current collector from the active material.

In other words, it may be provided that that at least one surface of the first collector layer being located opposite to the melting layer and the surface of the second collector layer being located opposite to the melting layer is provided with a thermal insulation layer.

According to this alternative, it may be provided that the thermal insulation layer is provided at the whole contact area between the current collector and the active material layer, or it is provided only in part. In the one case, it may thus be provided that the current collector is fully provided with the thermal insulation layer between the main layer and the active material layer, wherein the thermal insulation layer comprises a material which is electrically conductive.

Alternatively, it may be provided that the current collector is only partly provided with the thermal insulation layer between the main layer and the active material layer, or on the surface of at least one of the first collector layer and the second collector layer being opposite to the melting layer. Therefore, adjacent to the thermal insulation layer, the current collector is designed for being in direct contact to the active material layer of a battery cell. This embodiment allows using a material having an especially low heat conductance without the need of providing the material with properties which allow a sufficient electric interaction between the current conductor and the active material layer in order for an electrode to work properly. This is due to the fact that adjacent the portions of the thermal insulation layer, an effective interaction between the current collector and the active material layer may be provided which may allow an effective working behavior of the current collector.

Therefore, even electrical insulators may be used which often have a comparably high thermal insulation strength. As examples, it may be provided that the thermal insulation layer comprises a material selected from the group consisting of aluminum oxide, and polymer materials. With regard to polymer materials, in case they are electrically conductive, or with regard to further electrical conductive materials, of course the whole contact area between the current collector and the active material layer may be provided with the thermal insulation layer. This may allow an especially effective thermal insulation and thus acceleration of the current conductor melting in case of an electric short circuit.

Additionally or alternatively to one or more of the above arrangements, it may be advantageous that the current collector is structured in that the thickness of the current collector is altered, wherein the minimum thickness of the current collector is more than 0µm and thus at least partly without the provision of holes. This may allow at least locally to form a comparably thin current collector which in turn allows accelerating a melting step of the current collector at least at these structured positions.

As a non-limiting example, it may be provided that the current collector is structured by the provision of recesses.

With regard to the thickness of the current collector, it may generally and independently of the present embodiment be provided that the current collector has a thickness in the range or equal or more than 3µm to equal or less than 20µm. By allowing such a thickness, again, melting of the current collector may be accelerated. The above thickness may be present in case the current collector has a uniform thickness. In case it is structured like described before, it may be provided that the largest thickness is in the above-defined range, whereas the reduced thickness lies in the range of more than 0µm to equal or less than 2µm, such as equal or less than 1µm. According to this, it may be provided that the melting layer is omitted and that both of the first and second collector layers are provided in the region of reduced thickness or that only the melting layer is omitted and that only one of the first and second collector layers are provided in the region of reduced thickness or that in the region of reduced thickness one or more of the first collector layer, second collector layer and melting layer are provided with reduced thickness.

It may further be preferred that the melting layer has a thickness in the range of equal or more than 1µm to equal or less than 15µm such as in the range of equal or more than 1µm to equal or less than 5 µm. This embodiment may already achieve the security effect as described as the structure of the current collector as a whole may be weakened sufficiently. Further, the thickness of the current collector as a whole is not increased too largely or not at all, so that the current collector may be used in known battery cells without problems.

It may further be preferred that at least one of the first collector layer and the second collector layer has a thickness in the range of equal or more than 1µm to equal or less than 10 µm such as equal or less than 5 µm. According to this embodiment, the current carrying capability may be large enough as the respective collector layer may be connected to the active material of only one electrode layer out of the whole cell electrode stack. On the other side, this embodiment provides a thickness which may allow a comparably fast melting of the collector layer so that a thermal runaway may be prevented especially effectively.

It may further be preferred that electrically conductive connectors are provided which proceed through the melting layer and which electrically connect the first collector layer and the second collector layer. With this regard, an efficient electrical connection between the first collector layer and the second collector layer may be realized. With this regard, it may be provided that the connectors formed form the same material as at least one of the first collector layer and the second collector layer or all of the first collector layer, the second collector layer and the connectors are formed from the same material.

To summarize, a current collector as described before allows an effective measure for improving the security behavior of a battery cell, or a battery, respectively, equipped therewith by reducing the danger of a thermal runaway in case of a short circuit such as an internal short circuit.

The before named alternatives have in common that all of them allow accelerating melting of a current collector in case of a failure, such as a short circuit and increased currents arising in this regard.

According to the current collector as described, design elements for the positive electrode and/or the negative electrode of the cell are presented that can increase the internal short resistance and can avoid a thermal runaway like it is described in detail below especially by accelerating the melting step of a current collector.

With regard to further technical features and advantages of the current collector as described above, it is referred to the description of the battery cell, the figures and the description of the figures.

The present invention further relates to a battery cell, comprising at least one current collector like described before, wherein at least one surface of the first collector layer and of the second layer being located opposite to the melting layer is provided with a layer of active material and preferably wherein a further surface of the first collector layer and the second collector layer being located opposite to the melting layer is provided with a layer of active material, such as with the same layer of active material. It may be preferred that both the surface of the first collector layer being located opposite to the melting layer and the surface of the second collector layer being located opposite to the melting layer is provided with a layer of active material. Thus, an electrode may be formed, be it an anode or a cathode, wherein such an electrode may be interconnected with an opposing electrode to form a battery cell.

Further, the current collector may be formed as a foil or it may be formed rigid, according to the desired need and independently from the respective specific embodiment and thus for all embodiments described. The current collector is further arranged as described in detail above and may be formed as an anode or as a cathode or both, or two current collectors may be provided, wherein one of those is provided as a cathode and a further of those is provided as an anode.

The battery cell may be formed as a lithium ion cell. Additionally or alternatively, the battery cell may be formed as a so-called jelly roll or wound type cell, respectively, or it may have a stacked arrangement, for example.

Such a battery cell may thus provide an improved security behavior and may thus prevent or at least significantly reduce the danger of a thermal runaway for example in case an object is inserted into the cell structure or in case of a production contamination, such as particle contamination.

With regard to further technical features and advantages of the battery cell as described above, it is referred to the description of the current collector, the electrochemical energy storage device, the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematical sectional view of an embodiment of a current collector;
- Fig. 2: shows a schematical sectional view of a further embodiment of a current collector;
- Fig. 3: shows a schematical sectional view of a further embodiment of a current collector;
- Fig. 4: shows a schematical sectional view of a further embodiment of a current collector
- Fig. 5: shows potential short circuit current paths at a nail penetration test as a possible representation of an internal short circuit in a cell;
- Fig. 6: visualizes the effect of the present invention;
- Fig. 7: further visualizes the effect of the present invention; and
- Fig. 8: further visualizes the effect of the present invention.

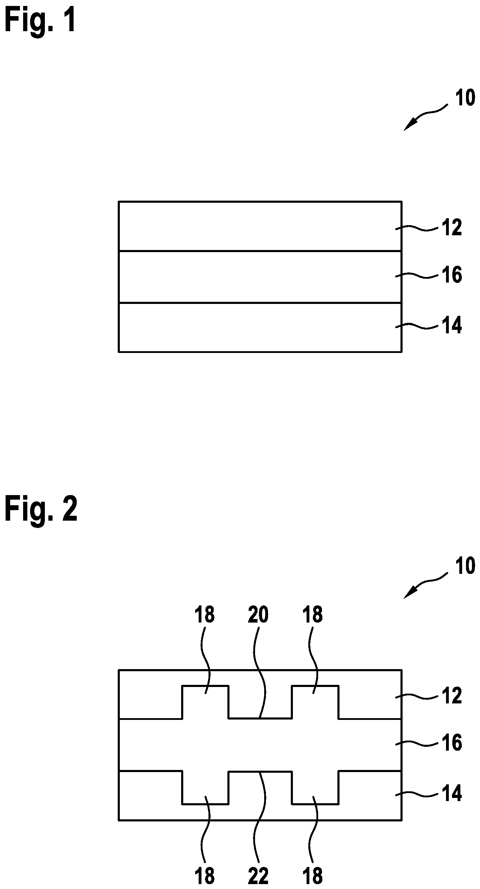

Figure 1 shows a current collector 10 for a battery cell such as for a lithium ion cell. The current collector 10 is formed in a multilayer arrangement having three layers, the layers comprising a first collector layer 12, a second collector layer 14 and a melting layer 16. The melting layer 16 is provided between the first collector layer 12 and the second collector layer 14.

The melting layer 16, or its melting material, respectively, has a melting point which is lower compared to the melting point of the first collector layer 12 and of the second collector layer 14, or of the respective material of the first collector layer 12 and the second collector layer 14. It can further be seen that according to figure 1, the melting layer 16 is positioned such that it is in contact with the first collector layer 12 at a first side and with a second collector layer 14 at an opposite side.

Figure 2 shows a further embodiment of a current collector 10. According to figure 2, it is provided that the melting layer comprises a surface 20 facing the first collector layer 12 and a surface 22 facing the second collector layer 14, wherein both surfaces 20, 22 are structured by the provision of protrusions 18.

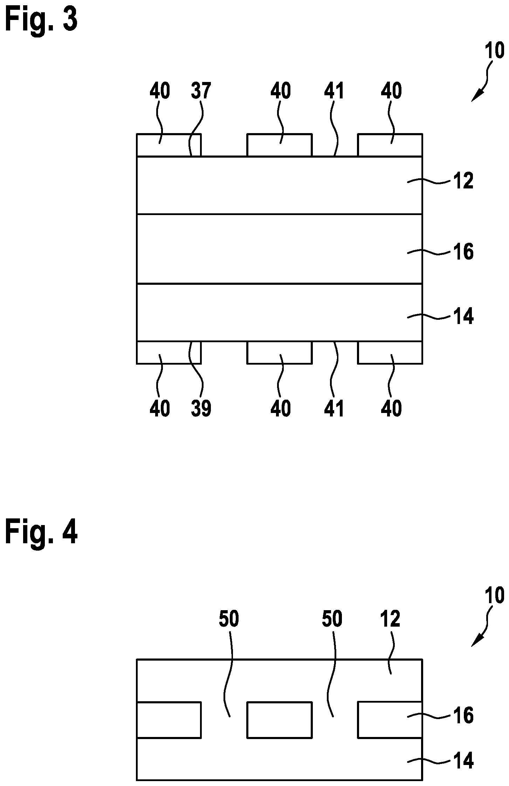

In figure 3, a further embodiment of a current collector is shown. According to figure 3, it is shown that the surface 37 of the first collector layer 12 being located opposite to the melting layer 16 and the surface 39 of the second collector layer 14 being located opposite to the melting layer 16 are provided with a thermal insulation layer 40. With this regard, adjacent to the thermal insulation layer 40, contact areas 41 are provided which are designed to come into electric contact with a layer of active material.

In figure 4, a further embodiment of a current collector 10 is shown. According to the embodiment of figure 4, it can be seen electrically conductive connectors 50 are provided which proceed through the melting layer 16 and which electrically connect the first collector layer 12 and the second collector layer 14. With this regard, an efficient electrical connection between the first collector layer 12 and the second collector layer 14 may be realized.

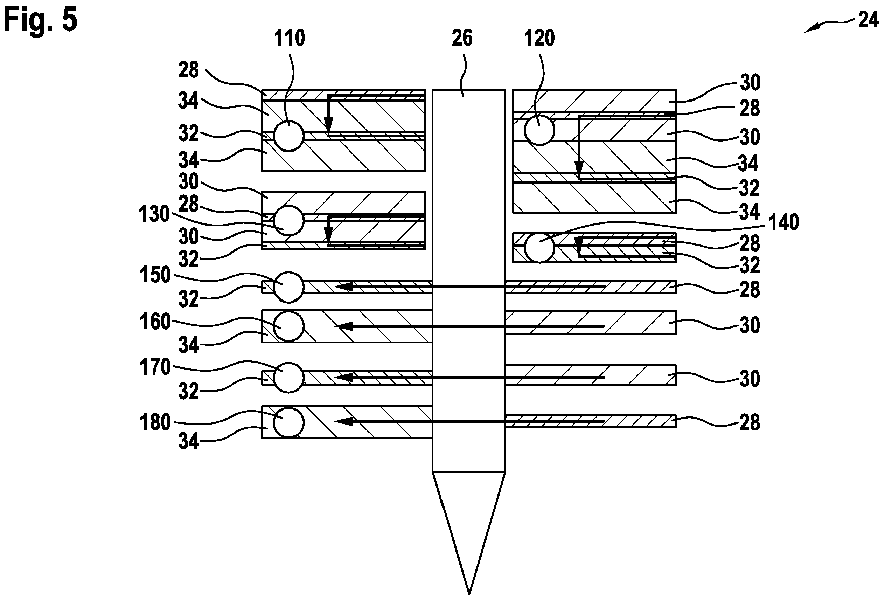

Figure 5 shows current paths which may arise in a battery cell 24 in case of a particle penetration into the cell electrode stack, which is imitated by the so-called nail penetration test.

In fact, the configuration of a schematical battery cell 24 is shown which is damaged by the penetration of a nail 26. The schematical battery cell 24 is shown by different layers of electrodes which are schematically and not fully shown for explanation purposes.

In fact, aluminum foils as cathode current collectors 28 are shown together with respective cathode active material layers 30 and further copper foils are shown as anode current collectors 32 are shown together with respective cathode active material layers 34.

There is no insulating separator in these representations of possible short circuits. Between cathode active material layers 30 und cathode active material layers 34 there is no separator because this is a failure-mode where the separator has melted away due to the created short-circuit temperature hot-spot. For a real undamaged battery cell 24, there will be a separator between cathode active material layers 30 und cathode active material layers 34.

The current paths which may form a short circuit are as follows and as shown by the arrows. They may be formed due to melting of the separator due to the short circuits temperature hotspot, such as current path 120 or by the deformation of the electrode stack bringing in electric contact different elements of the electrode stack, such as current paths 110, 130, 140 and finally directly short circuiting different elements of the electrode stack over the contamination particle/nail itself such as current paths 150, 160, 170, 180. Direct electric contacts of one electrode to the current collector of the opposite electrode, such as current paths 110, 130 or direct contact between both types of current collector such as current path 140 can for example arise if the electrodes active material layer 30, 34 has melted away due to the thermal heat created by the short circuit.

Current path 110 proceeds from the cathode current collector 28 to the anode active material layer 34 and further to the anode current collector 28 due to melting and/or removal of the separator and the cathode active material layer 30. At the stack or Jelly Roll edge where only bare aluminum foil can face the anode the only separation is by the separator, even increasing the risk.

Current path 120 proceeds from the cathode active material layer 30 to the anode active material layer 34 due to melting and/or removal of the separator, or from the cathode current collector 30 to the anode current collector 34, respectively.

Current path 130 proceeds from the cathode active material layer 30 to the anode current collector 32 due to melting and/or removal of the separator and the anode active material layer 34.

Current path 140 proceeds from the cathode current collectors 28 to the anode current collector 32 due to melting and/or removal of the separator and both active material layers 30, 34, or at the edge of the stack or Jelly Roll due to melting/removal of the separator and the anode active material layer 34.

Current path 150 proceeds from the cathode current collectors 28 to the anode current collector 32 via the nail 26.

Current path 160 proceeds from the cathode active material layer 30 to the anode active material layer 34 via the nail 26.

Current path 170 proceeds from the cathode active material layer 30 to the anode current collector 32 via the nail 26.

Current path 180 proceeds from the cathode current collectors 28 to the anode active material layer 34 via the nail 26.

Based on electric resistance measurements for each of the above-described current paths, it could be demonstrated that due to good conductivity of an anode material layer 34, which may be graphite based, an in comparison to the conductivity of the anode material layer 34 poorer conductivity of the cathode material layer 30, which may be a metal oxide, the short circuit resistance for paths 120, 130, 160 and 170 is relatively high in comparison to the resistance of the other short circuit paths because the current has to go through the cathode active material layer 30.

The lowest ohmic short circuit resistance is the one of paths 140 and 150, followed by 110 and 180 in case the contact resistance to the nail and of the nail itself is not too significant.

Therefore, for all low-ohmic short-circuits via current paths 140, 150, 110 and 180, a contact to the cathode current collector 28 is provided. Therefore, even though providing a current collector 10 according to the present invention as an anode current collector 32, using it as a cathode current collector 28 shows most effective security improvement.

Further and independently of the present embodiment, next to the fact that the melting layer 16 melts as security issue, providing an aluminum foil as cathode current collector layer 12, 14 may further improve the security behavior as an aluminum foil may melt at 660°C, which may be reached under short circuit characteristics. Further to that, the here discussed invention is supposed to dramatically lower the melting point of the Al current collector contact in case of the most severe (lowest ohmic) short circuits.

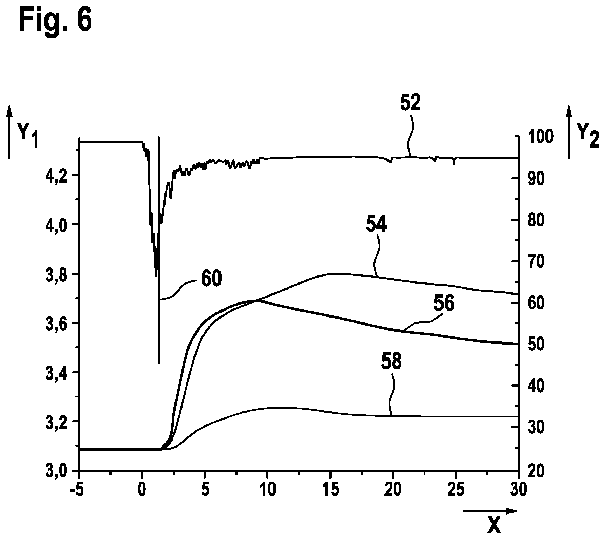

Figure 6 further shows the effect of the present invention. In detail, a nail penetration test was performed which tried to reproduce especially the short circuit paths 110, 140, 150 and 180. Fig. 6 shows a diagram having at its X- axis the time in seconds, at its Y₁-axis the voltage in V and at its Y₂-axis the temperature in °C. Further, line 52 refers to the voltage, line 54 refers to the cell surface temperature, line 56 refers to the temperature of the penetration hole of the nail 26 and line 58 refers to the temperature of the cells negative terminal.

It is shown that after a hard short circuit, indicated by the vertical line 60, the affected cathode current collectors 28 were melted and the contact lost after approximately 1 second occurred, resulting in the recovery of the cell voltage after the hard initial short-circuit 60. Consequently, also the heat development was nearly stopped and the cell discharged very safely over a very high ohmic short circuit. The initial heating power that is strongly reduced when the low ohmic short circuit contact has melted is indirectly visible with a bit of delay via cell external temperature sensors.

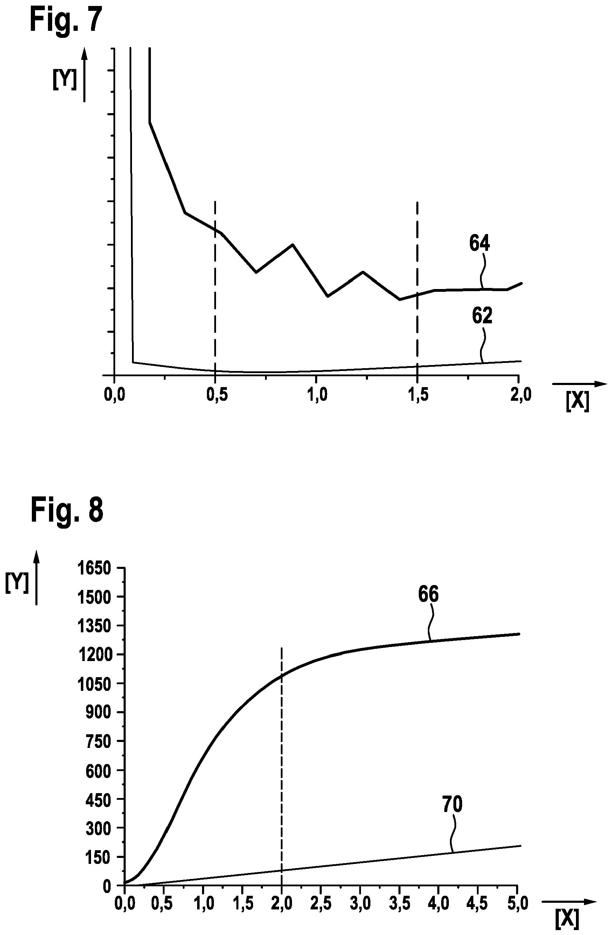

Figure 7 further shows the effect of the present invention. In detail, Figure 7 shows a diagram having at its X- axis the time in seconds and at its Y-axis the short circuit resistance at a nail penetration test. Line 62 refers to a standard copper current collector and line 64 refers to a laminate foil current collector 10 according to the invention. It can be seen that the short circuit resistance created during nail penetration of the cell stack measured between the two cell stacks is significantly improved/increased by a current collector 10 according to the invention. In detail it is shown that the short circuit resistance is increased by a factor 30 at 0,5s and by a factor 8 at 1.5s.

Figure 8 further shows the effect of the present invention. In detail, Figure 8 shows a diagram having at its X- axis the time in seconds and at its Y-axis the energy deposit into the cell in Joule at the same comparative nail penetration test as in Figure 7. Line 66 refers to a standard copper current collector and line 70 refers to a laminate foil current collector 10 according to the invention. It can be seen that the energy deposit is significantly improved by a current collector 10 according to the invention. In detail it is shown that the energy deposit is reduced by a factor 14 within the first two seconds. This is a result of the much higher short circuit resistance also measured in Figure 7 and thus lower short circuit power.

## Claims

1. Current collector for a battery cell (24), wherein the current collector (10) is formed in a multilayer arrangement comprising at least three layers, **characterized in that** the current collector comprises in its layer arrangement a first collector layer (12), a second collector layer (14) and a melting layer (16), wherein the melting layer (16) is provided between the first collector layer (12) and the second collector layer (14), wherein the melting layer (16) has a melting point which is lower compared to at least one of the first collector layer (12) and the second collector layer (14), and wherein the melting layer (16) is formed from a polymeric material and the first collector layer (12) and the second collector layer (14) are formed from a metal or from a metal alloy.

2. Current collector according to claim 1, **characterized in that** the melting layer (16) has a melting point which is lower compared to both of the first collector layer (12) and the second collector layer (14).

3. Current collector according to any of claims 1 or 2, **characterized in that** at least one of the surfaces (20, 22) of the melting layer (16) facing the first collector layer (12) and facing the second collector layer (14) is structured.

4. Current collector according to any of claims 1 to 3, **characterized in that** electrically conductive connectors (50) are provided which proceed through the melting layer (16) and which electrically connect the first collector layer (12) and the second collector layer (14).

5. Current collector according to any of claims 1 to 4, **characterized in that** at least one of the first collector layer (12) and the second collector layer (14) is formed from aluminum or an aluminum alloy or **in that** at least one of the first collector layer (12) and the second collector layer (14) is formed from copper or a copper alloy.

6. Current collector according to claim 5, **characterized in that** the aluminum alloy comprises an aluminum silicon alloy and **in that** the copper alloy comprises a copper zinc alloy and a copper silicon alloy.

7. Current collector according to any of claims 1 to 6, **characterized in that** at least one surface (37) of the first collector layer (12) being located opposite to the melting layer (16) and the surface (39) of the second collector layer (14) being located opposite to the melting layer (16) is provided with a thermal insulation layer (40).

8. Current collector according to claim 7, **characterized in that** thermal insulation layer (40) comprises a material selected from the group consisting of aluminum oxide, and polymer materials.

9. Current collector according to any of claims 1 to 8, **characterized in that** the current collector (10) is structured **in that** the thickness of the current collector (10) is altered, wherein the minimum thickness of the current collector is more than 0 µm.

10. Battery cell, comprising at least one current collector (10) according to any of claims 1 to 9, wherein at least one surface (37, 39) of the first collector layer (12) and of the second collector layer (14) being located opposite to the melting layer (16) is provided with a layer of active material.
